# EUROPÄISCHE PATENTSCHRIFT

(11) **EP 0 855 370 B1**
(45) Veröffentlichungstag und Bekanntmachung des Hinweises auf die Patenterteilung: **29.08.2001**
(21) Anmeldenummer: 98100036.7
(22) Anmeldetag: 03.01.1998
(51) Int. Cl.: C03B 7/16

(54) **Antriebseinrichtung für einen Tropfenverteiler einer Glasmaschine**
Drive mechanism for a gobdistributor in a glassmaking machine
Dispositif d'entraînement d'un distributeur de paraisons pour une machine de fabrication de verre

(30) Priorität: 24.01.1997 DE 19702427
(43) Veröffentlichungstag der Anmeldung: 29.07.1998
(73) Patentinhaber: GPS GLASPRODUKTIONS-SERVICE GMBH, 45329 Essen (DE)
(72) Erfinder: Driewer, Reiner, 46238 Bottrop (DE); Emrath, Norbert, 45721 Haltern (DE)
(74) Vertreter: Spalthoff, Adolf, Dipl.-Ing.

(56) Entgegenhaltungen:
- GB-A- 1 266 975
- US-A- 4 599 101

## Beschreibung

Die Erfindung bezieht sich auf eine Antriebseinrichtung für einen Tropfenverteiler einer Glasmaschine mit einem Servomotor, mittels dem die zur Bewegung des Tropfenverteilers erforderliche mechanische Antriebsenergie erzeugbar ist, einem Zahnriementrieb mit einem Zahnriemen zur Abnahme und Weiterleitung der vom Servomotor erzeugten mechanischen Antriebsenergie und Tropfenverteilerbüchsen, die drehfest am Tropfenverteiler angeordnet sind und durch deren Drehung der Tropfenverteiler in seine von ihm versorgten Aufnahmerinnen zugeordneten Abgabestellungen bewegbar ist.

Bei bekannten derartigen Antriebseinrichtungen für Tropfenverteiler wird die vom Servomotor erzeugte mechanische Antriebsenergie über einen Zahnriementrieb auf die Spindel eines Spindelgetriebes übertragen, dessen Spindelmutter aufgrund der Drehung der Spindel eine translatorische Hin- und Herbewegung ausführt. Das Mutterteil des Spindelgetriebes ist mit einer Zahnstange verbunden, die entsprechend der Hin- und Herbewegung des Spindelgetriebes ebenfalls eine Hin- und Herbewegung durchführt. Die Zahnstange kämmt mit den als Zahnradbüchsen ausgebildeten Tropfenverteilerbüchsen, so daß der Tropfenverteiler entsprechend den Hin- und Herbewegungen der Zahnstange verstellt wird, um die ihm zugeordneten Aufnahmerinnen des nachgeordneten Abschnitts der Glasmaschine mit Glastropfen zu versorgen.

Die durch den Servomotor als Drehung an dessen Ausgangswelle erzeugte mechanische Antriebsenergie wird bei ihrer Umwandlung in die Drehbewegung des Tropfenverteilers zunächst durch den Zahnriementrieb in die Drehbewegung der Spindel des Spindelgetriebes durch die drehfest jedoch axial verschieblich zur Spindel gelagerte Spindelmutter in eine translatorische Hin- und Herbewegung umgewandelt. Diese translatorische Hin- und Herbewegung der Spindelmutter wiederum wird durch den Eingriff zwischen der mit der Spindelmutter fest verbundenen Zahnstange in die als Zahnradbüchse ausgebildeten Tropfenverteilerbüchsen schließlich in die Drehbewegung des Tropfenverteilers umgesetzt. Hierdurch ergibt sich ein vergleichsweise aufwendiger Antriebsenergie-übertragungsweg zwischen dem Servomotor und dem Tropfenverteiler, wobei darüber hinaus eine Rotations- zunächst in eine Translations- und dann wieder zurück in eine Rotationsbewegung gewandelt wird.

Aus der gemäß Artikel 54 (3) EPÜ als Stand der Technik geltenden EP-A1-0 805 124 ist eine Antriebseinrichtung für den Tropfenverteiler einer Glasmaschine bekannt, bei der die ausgangsseitige Tropfenverteilerrinne auf einem Rahmenelement gelagert ist, welches seinerseits auf einer drehbaren Welle befestigt ist, die mittels einer Zahnriemenscheibe in Rotation versetzbar ist. Die Zahnriemenscheibe wird durch einen Antriebsgurt eines Zahnriementriebs angetrieben. Von der Zahnriemenscheibe, die drehfest mit der das Rahmenelement ebenfalls drehfest halternden Welle verbunden ist, wird eine Rotationsbewegung erzeugt, die in eine Drehbewegung der ausgangsseitigen Tropfenverteilerrinne umgesetzt wird. Hierbei wird berücksichtigt, daß durch die Schwenkung des Eingangsabschnitts der ausgangsseitigen Tropfenverteilerrinne derjenige Bereich nicht verlassen sind, in dem die Aufnahme eines Glastropfens, der von einer ortsfesten Öffnung abgegeben wird, durch die ausgangsseitige Tropfenverteilerrinne möglich ist.

Der Erfindung liegt die Aufgabe zugrunde, die eingangs geschilderte gattungsgemäße Antriebseinrichtung für den Tropfenverteiler einer Glasmaschine derart weiterzubilden, daß die Übertragung der mechanischen Antriebsenergie zwischen dem Servomotor und dem Tropfenverteiler erheblich vereinfacht ist.

Diese Aufgabe wird erfindungsgemäß dadurch gelöst, daß die Tropfenverteilerbüchsen des Tropfenverteilers als Bundbüchsen ausgebildet und mit Zahnriemenscheiben versehen sind und daß der Zahnriemen des Zahnriementriebs mit den Zahnriemenscheiben der Bundbüchsen des Tropfenverteilers in Antriebseingriff steht. Erfindungsgemäß entfällt somit das bei den entsprechenden Antriebseinrichtungen gemäß dem Stand der Technik vorhandene Spindelgetriebe. Vielmehr ist der durch die Ausgangswelle des Servomotors angetriebene Zahnriemen des Zahnriementriebs in unmittelbarem Eingriff mit den Zahnriemenscheiben der Bundbüchsen des Tropfenverteilers. Die Drehbewegung der Ausgangswelle des Servomotors wird somit unmittelbar in die Drehbewegung der Bundbüchsen bzw. der Zahnriemenscheiben des Tropfenverteilers umgesetzt. Eine Wandlung zwischen Rotations- und Translationsenergie findet im Falle der erfindungsgemäßen Antriebseinrichtung nicht mehr statt. Die Anzahl der zwischen der Ausgangswelle des Servomotors und den tropfenverteilerseitigen Zahnriemenscheiben vorhandenen Bauelemente ist im Vergleich zum Stand der Technik erheblich reduziert. Hieraus ergeben sich hinsichtlich Wartungs- und Reparaturaufwand erhebliche Reduzierungen. Darüber hinaus kann im Falle der erfindungsgemäßen Antriebseinrichtung auf das konstruktiv-technisch aufwendige Spindelgetriebe verzichtet werden, welches darüber hinaus mit einem besonders hohen Reparatur- und Wartungsaufwand einhergeht. Eine Zahnstange und eine Ausgestaltung der Tropfenverteilerbüchsen als Zahnradbüchsen, welche beide vergleichsweise aufwendig sind, kann im Falle der erfindungsgemäßen Antriebseinrichtung ebenfalls entfallen, woraus sich ebenfalls eine erhebliche Reduzierung des Wartungs- und Reparaturaufwands ergibt. Ein etwaiger Produktionsausfall aufgrund von erforderlichen Reparaturen der Antriebseinrichtung kann im Falle der erfindungsgemäßen Ausgestaltung der Antriebseinrichtung erheblich vermindert werden.

Ein auch langfristig zuverlässiger Eingriff des Zahnriemens des Zahnriementriebs in die servomotorseitigen und tropfenverteilerseitigen Zahnriemenscheiben kann gewährleistet werden, wenn eine verstellbare Andruckrolle vorgesehen ist, mittels der die Eingriffslänge zwischen dem Zahnriemen und einer servomotorseitigen Zahnriemenscheibe und den tropfenverteilerseitigen Zahnriemenscheiben variierbar und darüber hinaus der Zahnriemen spannbar ist.

Eine Erhöhung der Einsatzbreite der erfindungsgemäßen Antriebseinrichtung ist erzielbar, wenn zwischen einer Ausgangswelle des Servomotors und der servomotorseitigen Zahnriemenscheibe ein Getriebe geschaltet ist, mittels dem die Drehzahl der servomotorseitigen Zahnriemenscheibe bei gleicher Drehzahl der Ausgangswelle des Servomotors variierbar ist.

Im folgenden wird die Erfindung an Hand einer Ausführungsform unter Bezugnahme auf die Zeichnung näher erläutert.

Es zeigen:
- Figur 1: eine Draufsicht auf eine Ausführungsform einer erfindungsgemäßen Antriebseinrichtung für einen Tropfenverteiler einer Glasmaschine;
- Figur 2: den Schnitt A - A in Figur 1; und
- Figur 3: den Schnitt B - B in Figur 1.

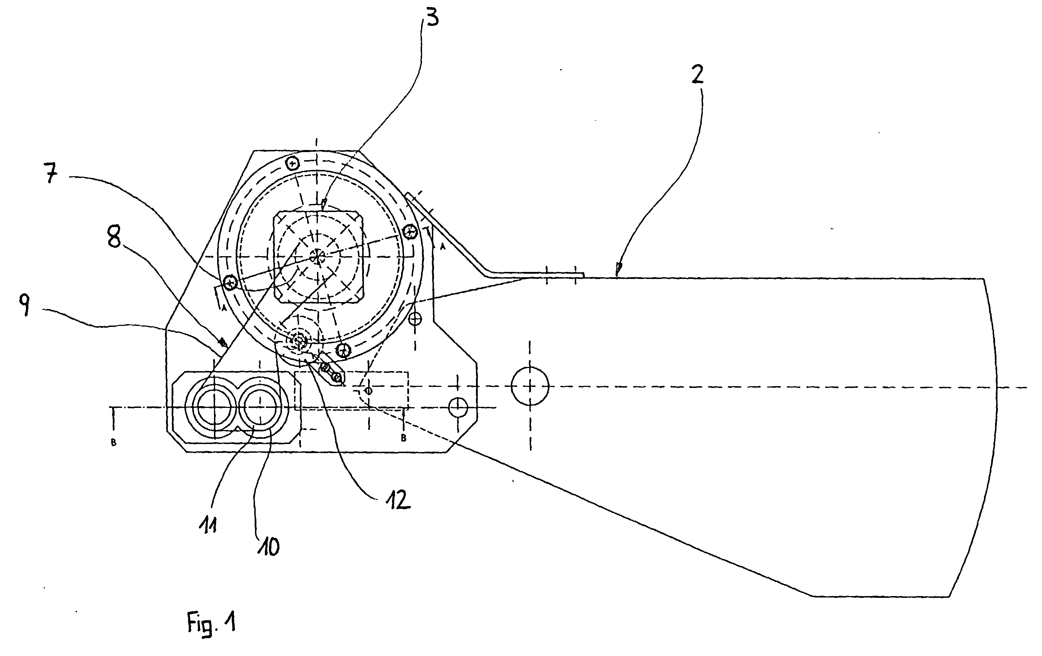

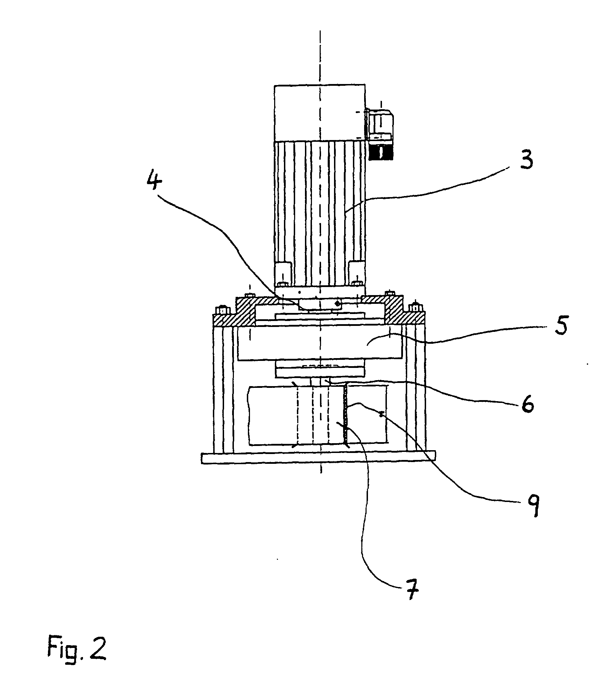

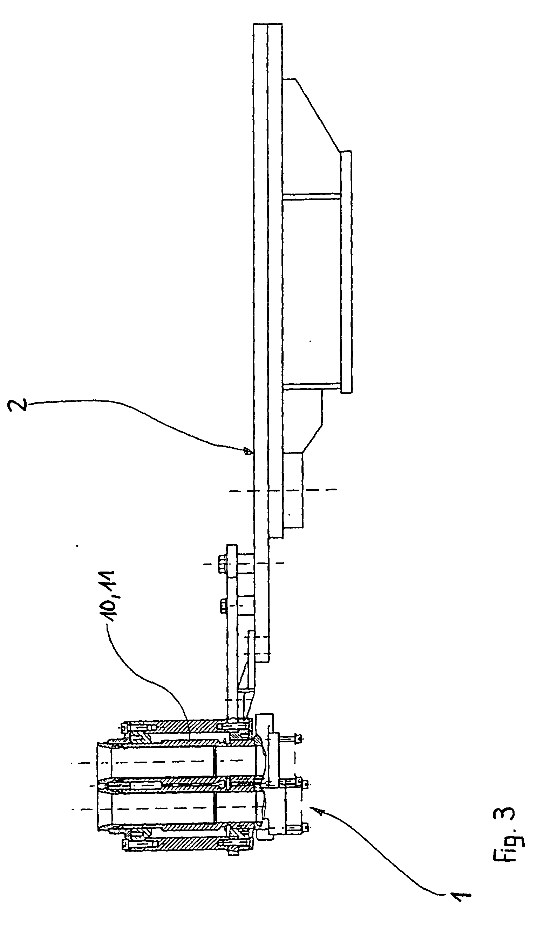

Eine in den Figuren 1 bis 3 dargestellte Antriebseinrichtung für einen Tropfenverteiler 1 einer in weiteren Einzelheiten in den Figuren nicht dargestellten Glasmaschine ist an ein Rahmenteil 2 der Glasmaschine montiert.

Die Antriebseinrichtung hat einen Servomotor 3, dessen Ausgangswelle 4 im in den Figuren 1 bis 3 dargestellten Ausführungsbeispiel mit der Eingangsseite eines in Einzelheiten nicht dargestellten Getriebes 5 verbunden ist.

Eine Ausgangswelle 6 dieses Getriebes 5 ist drehfest und koaxial mit einer getriebe- bzw. servomotorseitigen Zahnriemenscheibe 7 verbunden.

Die Zahnriemenscheibe 7 gehört zu einem Zahnriementrieb 8, dessen Zahnriemen 9 die getriebe- bzw. servomotorseitige Zahnriemenscheibe 7 mit zwei tropfenverteilerseitigen Zahnriemenscheiben 10 verbindet.

Jede tropfenverteilerseitige Zahnriemenscheibe 10 ist drehfest auf eine tropfenverteilerseitige Bundbüchse 11 montiert.

Aufgrund der drehfesten Anbringung der Zahnriemenscheiben 10 auf den Bundbüchsen 11 dreht sich mit einer Bewegung des Zahnriemens 9 der Tropfenverteiler 1 der Glasmaschine.

Ein die Funktionsfähigkeit des Zahnriementriebs 8 sichernder fester Eingriff zwischen dem Zahnriemen 9 und den tropfenverteilerseitigen Zahnriemenscheiben 10 sowie der getriebe- bzw. servomotorseitigen Zahnriemenscheibe 7 wird im dargestellten Ausführungsbeispiel mittels einer Andruckrolle 12 bewerkstelligt, die verstellbar ist und mittels der der Umschlingungswinkel zwischen dem Zahnriemen 9 und den tropfenverteilerseitigen Zahnriemenscheiben 10 sowie der servomotorseitigen Zahnriemenscheibe 7 variierbar ist.

Bei Inbetriebsetzung des Servomotors 3 wird dessen Ausgangswelle 4 in Drehung versetzt, wobei diese Drehung über das Getriebe 5 in eine Drehung der Ausgangswelle 6 desselben bzw. der getriebe- bzw. servomotorseitigen Zahnriemenscheibe 7 umgesetzt wird. Durch den Zahnriemen 9 wird die Drehung der getriebe- bzw. servomotorseitigen Zahnriemenscheibe 7 in eine entsprechende Drehung der tropfenverteilerseitigen Zahnriemenscheiben 10 und damit eine Drehung des Tropfenverteilers 1 umgesetzt. Die Steuerung des Servomotors 3 erfolgt in der Weise, daß der Tropfenverteiler zu den gewünschten Zeitpunkten sich in denjenigen Positionen befindet, in denen er oberhalb der ihm zugeordneten Aufnahmerinnen angeordnet ist, um zu den gewünschten Zeitpunkten Glastropfen in diese Aufnahmerinnen aufzugeben.

## Patentansprüche

1. Antriebseinrichtung für einen Tropfenverteiler (1) einer Glasmaschine mit einem Servomotor (3), mittels dem die zur Bewegung des Tropfenverteilers (1) erforderliche mechanische Antriebsenergie erzeugbar ist, einem Zahnriementrieb (8) mit einem Zahnriemen (9) zur Abnahme und Weiterleitung der vom Servomotor (3) erzeugten mechanischen Antriebsenergie, und Tropfenverteilerbüchsen (11), die drehfest am Tropfenverteiler (1) angeordnet sind und durch deren Drehung der Tropfenverteiler (1) in seine von ihm versorgten Aufnahmerinnen zugeordneten Abgabestellungen bewegbar ist, **dadurch gekennzeichnet**, daß die Tropfenverteilerbüchsen des Tropfenverteilers (1) als Bundbüchsen (11) ausgebildet und mit Zahnriemenscheiben (10) versehen sind und daß der Zahnriemen (9) des Zahnriementriebs (8) mit den Zahnriemenscheiben (10) der Bundbüchsen (11) in Antriebseingriff steht.

2. Antriebseinrichtung nach Anspruch 1, mit einer verstellbaren Andruckrolle (12), mittels der die Eingriffslänge zwischen dem Zahnriemen (9) und einer servomotorseitigen Zahnriemenscheibe (7) und den tropfenverteilerseitigen Zahnriemenscheiben (10) variierbar und der Zahnriemen (9) spannbar ist.

3. Antriebseinrichtung nach Anspruch 1 oder 2, bei der zwischen einer Ausgangswelle (4) des Servomotors (3) und der servomotorseitigen Zahnriemenscheibe (7) ein Getriebe (5) geschaltet ist.

## Claims

1. Drive device for a gob distributor (1) of a glass machine, having a servo motor (3) by means of which the mechanical drive energy necessary to move the gob distributor (1) can be produced, a toothed belt drive (8) having a toothed belt (9) for the removal and further conveyance of the mechanical drive energy produced by the servo motor (3), and gob distributor sleeves (11) which are arranged in a rotationally secure manner on the gob distributor (1) and by the rotation of which the gob distributor (1) is movable into its delivery positions associated with the receiving channels it supplies, **characterised in that** the gob distributor sleeves of the gob distributor (1) are in the form of flanged sleeves (11) and are provided with toothed pulleys (10), and in that the toothed belt (9) of the toothed belt drive (8) is in drive engagement with the toothed pulleys (10) of the flanged sleeves (11).

2. Drive device according to claim 1, having an adjustable pressure roller (12) by means of which the engagement length between the toothed belt (9) and a toothed pulley (7) on the servo motor side and the toothed pulleys (10) on the gob distributor side is variable and the toothed belt (9) is tensionable.

3. Drive device according to claim 1 or 2, wherein gearing (5) is connected between an output shaft (4) of the servo motor (3) and the toothed pulley (7) on the servo motor side.

## Revendications

1. Dispositif d'entraînement pour un distributeur de paraisons (1) dans une machine de fabrication de produits verriers, comprenant un servomoteur (3), à l'aide duquel l'énergie motrice nécessaire au déplacement du distributeur de paraisons (1) est produite, une transmission (8) à courroie crantée, avec une courroie crantée (9) pour recevoir et transmettre l'énergie motrice mécanique fournie par le servomoteur (3), et des manchons (11) de distributeur de paraisons qui sont montés fixes en rotation sur le distributeur de paraisons (1) et par la rotation desquels le distributeur de paraisons (1) peut être amené dans ses positions de distribution associées à des goulottes réceptrices desservies par ledit distributeur, **caractérisé en ce que** les manchons du distributeur de paraisons (1) sont conformés en manchons à collet (11) et sont pouvus du poulies (10) à courroie crantée et en ce que la courroie crantée (9) de la transmission (8) est en prise d'entraînement avec les poulies (10) à courroie crantée des manchons (11) pourvus à collet.

2. Dispositif d'entraînement selon la revendication 1, comportant un galet presseur (12) réglable, à l'aide duquel il est possible de modifier la longueur d'engrènement entre la courroie crantée (9) et une poulie (7) à courroie crantée côté servomoteur et les poulies (10) à courroie crantée côté distributeur de paraisons et de tendre la courroie crantée (9).

3. Dispositif d'entraînement selon la revendication 1 ou 2, dans lequel un réducteur (5) est intercalé entre un arbre de sortie (4) du servomoteur (3) et la poulie (7) à courroie crantée côté servomoteur (3).
